# EUROPÄISCHE PATENTSCHRIFT

(11) **EP 2 811 855 B1**
(45) Veröffentlichungstag und Bekanntmachung des Hinweises auf die Patenterteilung: **23.08.2017**
(21) Anmeldenummer: 13708666.6
(22) Anmeldetag: 05.02.2013
(51) Int. Cl.: A44B 11/25, B60R 99/00

(54) **GURTSCHLOSS MIT FREIGABESPERRE**
BELT BUCKLE WITH RELEASE LOCK
BOUCLE DE CEINTURE DE SÉCURITÉ COMPORTANT UN VERROU DE LIBÉRATION

(30) Priorität: 07.02.2012 DE 102012002207; 13.09.2012 DE 102012018070
(43) Veröffentlichungstag der Anmeldung: 17.12.2014
(73) Patentinhaber: TRW Automotive GmbH, 73553 Alfdorf (DE)
(72) Erfinder: HAAS, Peter, 73569 Eschach (DE)
(74) Vertreter: Prehn, Manfred
(86) Internationale Anmeldenummer: PCT/EP2013/000340
(87) Internationale Veröffentlichungsnummer: WO 2013/117317

(56) Entgegenhaltungen:
- US-A- 5 595 400
- US-A1- 2008 127 466
- US-A1- 2011 185 546
- US-B1- 6 205 628

## Beschreibung

Die Erfindung betrifft ein Gurtschloss für einen Sicherheitsgurt.

Insbesondere bei Gurtschlössern, die an einen Gurtstraffer gekoppelt sind, besteht aufgrund der starken Beschleunigung zu Beginn oder am Ende einer Gurtstraffung, wenn große Trägheitskräfte auf die Bauteile des Gurtschlosses wirken, die Gefahr eines selbsttätigen Öffnens des Gurtschlosses. Freigabesperren, die ein solches unbeabsichtigtes Öffnen des Gurtschlosses verhindern sollen, sind in unterschiedlicher Bauform bekannt.

So zeigt die EP 0 557 983 A1 ein Sicherheitsgurtschloss mit einer Verriegelungssperre, bei der im Falle hoher Massekräfte ein als Verriegelungselement dienender Sperrstift sicher in einer sperrenden Position gehalten wird, indem seine Bewegungsbahn in einer Kulisse durch ein Sperrelement blockiert ist. Das Sperrelement ist ein am Gehäuse des Gurtschlosses drehbar gelagerter Schwenkkörper, der mit einem freien ersten Arm in eine Verriegelungsstellung bewegbar ist, in der er den Sperrstift gegen eine Bewegung aus der Sperrstellung sichert. Der Schwenkkörper weist einen abgewinkelten zweiten Arm zur Betätigung und Verschwenkung des Schwenkkörpers durch die Lösetaste des Gurtschlosses in eine den Sperrstift freigebende Stellung auf. Der zweite Arm ist an seinem freien Ende mit der Lösetaste über ein Schubkurbelgetriebe verbunden.

Aus der EP 0 823 223 A2 und auch aus der US2011/185546 sind Gurtschlösser mit den Merkmalen des Oberbegriffs des Anspruchs 1 bekannt. Bei diesem Gurtschloss ist ein am Gehäuse des Gurtschlosses um eine Drehachse schwenkbar gelagerter, mehrarmiger Sperrhebel zum Verhindern des selbsttätigen Verschiebens der Lösetaste vorgesehen. Ein erster Arm des Sperrhebels ist an der Lösetaste angelenkt, während an einem zweiten Arm ein Schwenkkörper derart beweglich gelagert ist, dass er bei abrupter Geschwindigkeitsänderung in einer Bewegungsrichtung eine Trägheitskraft auf den zweiten Arm überträgt, wobei in Gegenrichtung durch eine Bewegung relativ zum zweiten Arm die Kraftübertragung vom Schwenkkörper auf den Sperrhebel unterbrochen ist.

Aufgabe der Erfindung ist es, ein Gurtschloss mit einem einfach zu integrierenden Sicherungsmechanismus zum Verhindern eines selbsttätigen Öffnens des Gurtschlosses zu schaffen, der zuverlässig funktioniert und kostengünstig herstellbar ist.

Gelöst wird diese Aufgabe durch ein Gurtschloss mit den Merkmalen des Anspruchs 1. Vorteilhafte und zweckmäßige Ausgestaltungen des erfindungsgemäßen Gurtschlosses sind in den Unteransprüchen angegeben.

Das erfindungsgemäße Gurtschloss für einen Sicherheitsgurt umfasst ein Schlossgehäuse, einen Verriegelungsmechanismus zum Verriegeln einer in das Schlossgehäuse eingeführten Steckzunge, eine Lösetaste, die in eine erste Richtung relativ zum Schlossgehäuse verschiebbar ist zum Entriegeln der Steckzunge, und einen Sicherungsmechanismus zum Verhindern eines selbsttätigen Verschiebens der Lösetaste in der ersten Richtung. Gemäß der Erfindung weist der Sicherungsmechanismus einen in der ersten Richtung relativ zum Schlossgehäuse beweglichen Massekörper und einen drehbar gelagerten Kopplungshebel mit einer Drehachse auf, die relativ zum Schlossgehäuse unbeweglich ist. Der Kopplungshebel ist so an den Massekörper und an die Lösetaste gekoppelt, dass er bei einer Beschleunigung des Gurtschlosses in einer der ersten Richtung entgegengesetzten zweiten Richtung eine in der ersten Richtung auf den Massekörper wirkende Trägheitskraft in der entgegengesetzten zweiten Richtung auf die Lösetaste überträgt.

Die Erfindung beruht auf der Erkenntnis, dass ein unbeabsichtigtes Öffnen eines Gurtschlosses dadurch verhindert werden kann, dass bei Auftreten einer starken Beschleunigung einer in der Betätigungsrichtung (erste Richtung) auf die Lösetaste wirkenden Trägheitskraft automatisch eine Gegenkraft entgegengesetzt wird. Hierzu sind gemäß der Erfindung der Massekörper und der Kopplungshebel vorgesehen. Der drehbare, aber nicht verschiebbare Kopplungshebel sorgt dafür, dass die auf den Massekörper wirkende Trägheitskraft in umgekehrter Richtung auf die Lösetaste übertragen wird. Auf diese Weise kann verhindert werden, dass die Lösetaste eine unerwünschte Verschiebung in der Betätigungsrichtung ausführt. Der erfindungsgemäße Sicherungsmechanismus benötigt nur wenige, einfach geartete Bauteile, sodass eine weitgehend problemlose Integration in ein Gurtschloss ohne übermäßige Mehrkosten möglich ist.

Im Sinne der Erfindung ist unter einem Schlossgehäuse auch ein Rahmen oder ein sonstiger lasttragender Aufbau zu verstehen. Ferner soll der Begriff Lösetaste etwaige fest mit dieser verbundene Bauteile mit einschließen.

Besonders effektiv ist der erfindungsgemäße Sicherheitsmechanismus in einer Ausgestaltung, bei der die Masse des Massekörpers größer als die Masse der Lösetaste ist. In diesem Fall ist bei gleicher Beschleunigung die auf den Massekörper wirkende, umgelenkte Trägheitskraft größer als die in der Betätigungsrichtung auf die Lösetaste wirkende Trägheitskraft. Zur Verhinderung einer Verschiebung der Lösetaste ist es dann also nicht zwingend notwendig, eine weitere Masse an den Massekörper anzukoppeln oder ergänzende Maßnahmen vorzusehen.

Für die Richtungsumkehr der auf den Massekörper wirkenden Trägheitskraft weist der Kopplungshebel gemäß einer bevorzugten Ausführungsform der Erfindung zwei sich von der Drehachse erstreckende freie Arme auf, wobei ein erster freier Arm an der Lösetaste und ein zweiter freier Arm am Massekörper angreift. Der Kopplungshebel wirkt in diesem Fall wie eine Wippe, die einen auf der Seite des Massekörpers eingehenden Impuls auf der Seite der Lösetaste in entgegengesetzter Richtung ausgibt.

Der Sicherungsmechanismus soll selbstverständlich den normalen Gebrauch des Gurtschlosses nicht beeinträchtigen. Um unter normalen Bedingungen bei eingesteckter Steckzunge des Sicherheitsgurts ein ungehindertes Drücken der Lösetaste in der Betätigungsrichtung zu gewährleisten, ist vorzugsweise vorgesehen, dass im Normalzustand des Gurtschlosses, in dem sich die Lösetaste relativ zum Schlossgehäuse in einer in der zweiten Richtung ausgefahrenen Position befindet, der erste freie Arm in der zweiten Richtung an der Lösetaste anliegt, insbesondere an einer Stufe, und durch eine Verschiebung der Lösetaste in der ersten Richtung auslenkbar ist. Da unter normalen Umständen keine nennenswerte Trägheitskraft auf den Massekörper wirkt, übt dieser keine Gegenkraft auf die Lösetaste aus, sodass aufgrund der Auslenkbarkeit des Kopplungshebels ein ungehindertes Verschieben der Lösetaste in der Betätigungsrichtung gestattet ist. Dies gilt jedoch nicht, wenn - wie oben beschrieben - das Gurtschloss stark entgegen der Betätigungsrichtung beschleunigt wird, da dann über den Kopplungshebel die Gegenkraft des Massekörpers auf die Lösetaste übertragen wird.

Um eine weitgehend widerstandsfreie Auslenkung des Kopplungshebels bei normaler Betätigung der Lösetaste zu gewährleisten, ist eine Konstruktion vorteilhaft, die es erlaubt, dass der zweite freie Arm bei der Auslenkung des Kopplungshebels auf die Stufe der Lösetaste gleitet.

Es ist sinnvoll, die Verschiebung des Massekörpers in der ersten Richtung zu begrenzen. Dies kann durch einen schlossgehäusefesten Anschlag erreicht werden, der vorzugsweise in der Bewegungsbahn eines Gegenanschlags des Massekörpers liegt. Unter einem "schlossgehäusefesten Anschlag" ist ein Anschlag zu verstehen, der entweder direkt am Gehäuse gebildet oder relativ zum Gehäuse unbeweglich ist.

Wichtiger noch ist es, bei einer Beschleunigung des Gurtschlosses in der ersten Richtung eine durch die in der zweiten Richtung auf den Massekörper wirkende Trägheitskraft bedingte Verschiebung des Massekörpers in der zweiten Richtung zu begrenzen, damit der Massekörper bei einer abrupten Beschleunigungsumkehr seine Aufgabe ohne Beeinträchtigung erfüllen kann. Hierfür ist gemäß einer Weiterbildung der Erfindung ein Sperrmechanismus vorgesehen.

In der bevorzugten Ausführungsform des Sperrmechanismus weist dieser einen Schwenkkörper auf, der drehbar um eine Drehachse am Massekörper gelagert ist und einen Schwerpunkt hat, der bezüglich seiner Drehachse exzentrisch ist. Die bei einer Beschleunigung des Schwenkkörpers auf diesen wirkende Trägheitskraft erzeugt ein Drehmoment, das zu einer Auslenkung des Schwenkkörpers führt. Diese selbsttätige Auslenkung des Schwenkkörpers kann vorteilhaft für eine Sperrung des Massekörpers genutzt werden.

Die Sperrung des Massekörpers kann insbesondere durch eine Konstruktion erreicht werden, bei der eine in der zweiten Richtung auf den Schwenkkörper wirkende Trägheitskraft eine Auslenkung des Schwenkkörpers bewirkt, durch die ein Sicherungsabschnitt des Schwenkkörpers in Eingriff mit einem schlossgehäusefesten Halteabschnitt kommt.

Da der Schwenkkörper am Massekörper gelagert ist, trägt im Falle einer starken Beschleunigung des Gurtschlosses entgegen der Betätigungsrichtung neben der Masse des Massekörpers auch die Masse des Schwenkkörpers zur Erzeugung der Gegenkraft bei, die einer Verschiebung der Lösetaste in der Betätigungsrichtung entgegenwirkt. Somit ist es in diesem Fall ausreichend, wenn die Summe der Massen des Massekörpers und des Schwenkkörpers größer ist als die Masse der Lösetaste.

Eine alternative Ausführungsform des erfindungsgemäßen Gurtschlosses kommt ohne Schwenkkörper aus, was eine nicht unerhebliche Verkürzung der Baulänge des Gurtschlosses ermöglicht. Bei der alternativen Ausführungsform ist der Sperrmechanismus so ausgelegt, dass eine Bewegung des Massekörpers in der zweiten Richtung eine Drehung des Kopplungshebels bewirkt, die durch einen schlossgehäusefesten Halteabschnitt, hier an der Rastnockenführung, begrenzt ist. Durch die Begrenzung der Drehung des Kopplungshebels wird eine weitergehende Bewegung des Massekörpers in der zweiten Richtung unterbunden. Somit ist trotz der verkürzten Baulänge auch bei dieser Ausführungsform sichergestellt, dass bei einer Beschleunigung des Gurtschlosses in der ersten Richtung eine Verschiebung des Massekörpers in der zweiten Richtung zuverlässig begrenzt wird, damit der Massekörper bei einer abrupten Beschleunigungsumkehr sofort wieder an der richtigen Stelle zur Verfügung steht.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine Explosionsansicht eines erfindungsgemäßen Gurtschlosses nach einer ersten Ausführungsform;
- Figur 2 eine perspektivische Ansicht des Gurtschlosses aus Figur 1 im Normalzustand;
- Figur 3 eine Seitenansicht des Gurtschlosses aus Figur 1 im Normalzustand;
- Figur 4 eine seitliche Schnittansicht des Gurtschlosses aus Figur 1 im Normalzustand;
- Figur 5 eine gegenüber der Ansicht in den Figuren 3 und 4 um 90° gedrehte Seitenansicht des Gurtschlosses aus Figur 1 im Normalzustand;
- Figur 6 eine Seitenansicht des Gurtschlosses aus Figur 1 bei gedrückter Lösetaste;
- Figur 7 eine seitliche Schnittansicht des Gurtschlosses aus Figur 1 bei gedrückter Lösetaste;
- Figur 8 eine gegenüber den Ansichten in den Figuren 6 und 7 um 90° gedrehte Seitenansicht des Gurtschlosses aus Figur 1 bei gedrückter Lösetaste;
- Figur 9 eine Seitenansicht des Gurtschlosses aus Figur 1 bei Beschleunigung in einer ersten Richtung;
- Figur 10 eine seitliche Schnittansicht des Gurtschlosses aus Figur 1 bei Beschleunigung in der ersten Richtung;
- Figur 11 eine gegenüber den Ansichten in den Figuren 9 und 10 um 90° gedrehte Seitenansicht des Gurtschlosses aus Figur 1 bei Beschleunigung in der ersten Richtung;
- Figur 12 eine seitliche Schnittansicht eines erfindungsgemäßen Gurtschlosses nach einer zweiten Ausführungsform im Normalzustand; und
- Figur 13 eine seitliche Schnittansicht des Gurtschlosses aus Figur 12 bei Beschleunigung in der ersten Richtung.

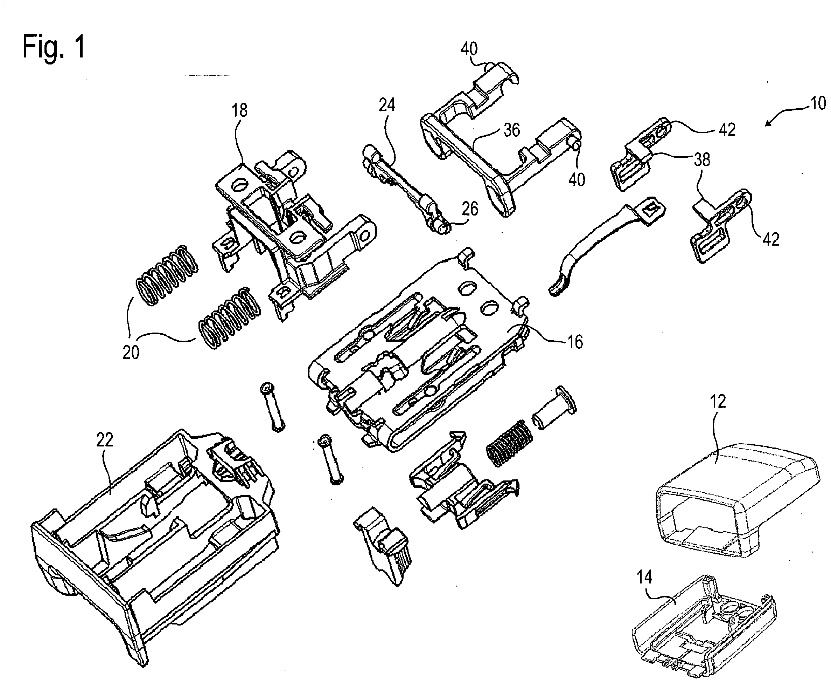

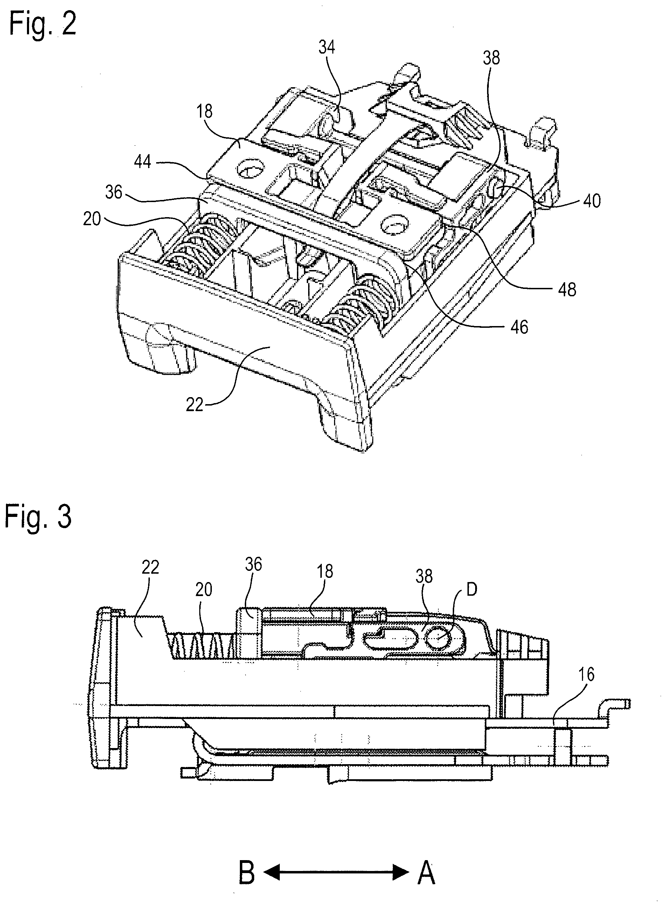

In den Figuren 1 bis 11 ist ein Gurtschloss 10 für ein Sicherheitsgurtsystem nach einer ersten Ausführungsform dargestellt, das an einem nicht gezeigten Beschlagteil, entweder direkt oder mit einem am Beschlagteil angeschlossenen Gurtstraffer, fahrzeugfest befestigt ist. Die Gehäuseschalen 12, 14 sind in den Figuren 2 bis 11 weggelassen, um den Blick auf die inneren Bauteile des Gurtschlosses 10 freizugeben. Von den in Figur 1 gezeigten Bauteilen wird nachfolgend nur auf die für die Erfindung relevanten Bauteile eingegangen, da der grundsätzliche Aufbau und die grundsätzliche Funktionsweise eines Gurtschlosses 10 als bekannt vorausgesetzt werden.

An einem lasttragenden Schlossgehäuse 16 ist eine Rastnockenführung 18 fest montiert. Zwei Druckfedern 20 spannen eine schlittenartig ausgebildete und relativ zum Gehäuse in den Richtungen A und B verschiebbare Lösetaste 22 in der der Betätigungsrichtung (erste Richtung) A entgegengesetzten Richtung (zweite Richtung) B vor.

Ein zweiarmiger Kopplungshebel 24 ist über seitlich vorstehende Stifte 26 drehbar an der Rastnockenführung 18 gelagert. Im Normalzustand des Gurtschlosses 10 liegt ein erster freier Arm 28 des Kopplungshebels 24 in der Richtung B an einer Stufe 32 der Lösetaste 22 an, ist mit dieser aber nicht fest verbunden. Ein zweiter freier Arm 30 des Kopplungshebels 24, der sich entgegengesetzt zum ersten freien Arm 28 erstreckt, ragt in eine Aufnahme 34 eines in den Richtungen A und B verschiebbaren Massekörpers 36. Die Aufnahme 34 und der zweite freie Arm 30 sind so aufeinander abgestimmt, dass der zweite freie Arm 30 relativ zur Aufnahme 34 eine gewisse Beweglichkeit hat, dass aber auch bei einer Bewegung des Massekörpers 36 in der Richtung A oder B eine permanente Kopplung zwischen dem Massekörper 36 und dem Kopplungshebel 24 besteht.

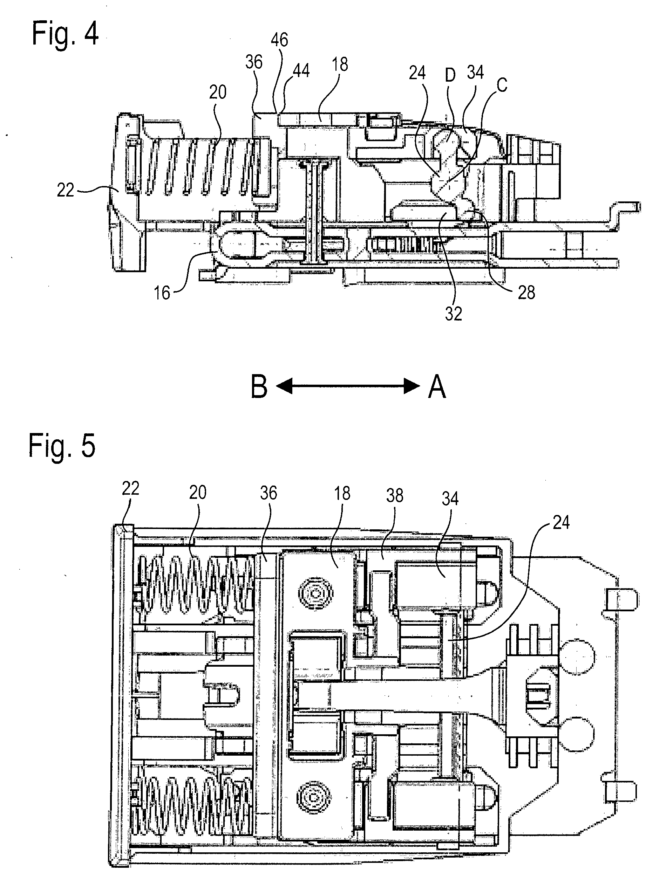

Des Weiteren umfasst das Gurtschloss 10 noch einen Schwenkkörper 38, der drehbar am Massekörper 36 gelagert ist. Hierzu weist der Massekörper 36 an einem Ende seitlich nach außen ragende Lagerstifte 40 auf, in die der mit entsprechenden Lageröffnungen 42 versehene Schwenkkörper 38 eingehängt ist. Der Schwenkkörper 38 hat einen bezüglich seiner Drehachse D exzentrischen Schwerpunkt. Genauer gesagt liegt der Schwerpunkt des Schwenkkörpers 38 in der Richtung B versetzt und - gemäß der Darstellung in den Figuren 3 und 4 - unterhalb der Drehachse D.

Die Masse der Lösetaste 22 (einschließlich etwaiger fest an diese angebrachter Bauteile) ist geringer als die Summe der Massen des Massekörpers 36 und des an diesen drehbar angekoppelten Schwenkkörpers 38. Dies schließt auch Ausführungsformen ein, bei denen der Massekörper 36 oder der Schwenkkörper 38 alleine eine größere Masse als die Lösetaste 22 hat.

Im normalen Zustand des Gurtschlosses 10, der in den Figuren 2 bis 5 dargestellt ist, ist die Lösetaste 22 nicht gedrückt und befindet sich relativ zum Schlossgehäuse 16 in einer in der Richtung B ausgefahrenen Position. Durch Drücken der Lösetaste 22 in der Richtung A gegen die Vorspannkraft der Druckfedern 20 kann eine in das Gurtschloss 10 eingesteckte und durch einen Verriegelungsmechanismus, hier ein Rastnockenmechanismus, verriegelte Steckzunge eines Sicherheitsgurts (nicht gezeigt) entriegelt werden. Auf den Verriegelungsmechanismus wird nicht näher eingegangen, da dessen konkrete Ausgestaltung für die Erfindung nicht relevant ist.

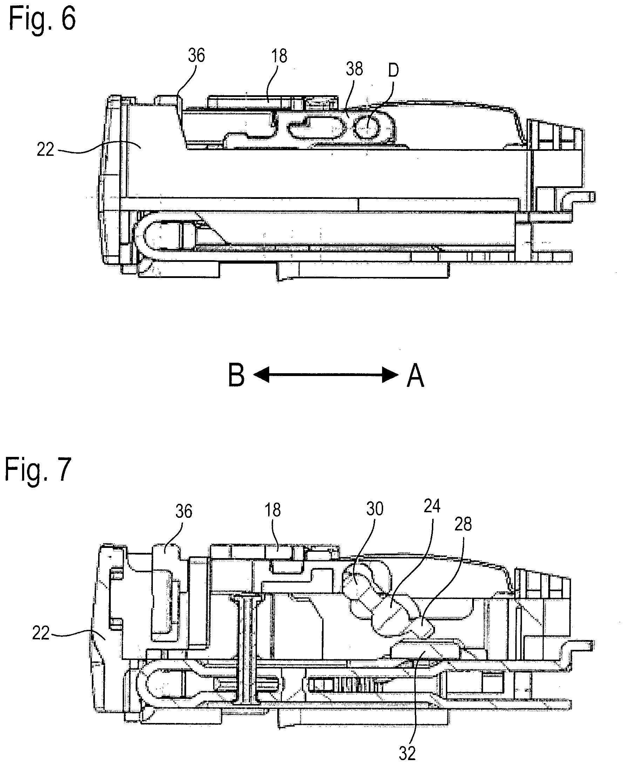

Der Zustand des Gurtschlosses 10 bei gedrückter Lösetaste 22 ist in den Figuren 6 bis 8 dargestellt. Die Lösetaste 22 ist relativ zum Schlossgehäuse 16 in der Richtung A verschoben. Solange in der Richtung A keine nennenswerte Kraft auf den Massekörper 36 oder den Schwenkkörper 38 wirkt, wird die Bewegung der Lösetaste 22 in der Richtung A durch die beiden Körper 36, 38 nicht behindert, da dem Kopplungshebel 24 eine Drehbewegung gestattet ist, bei der der erste freie Arm 28 auf die Stufe 32 der Lösetaste 22 gleitet und auf dieser zu liegen kommt, wie in Figur 7 zu erkennen ist. Dabei schiebt der zweite freie Arm 30 des Kopplungshebels 24 den Massekörper 36 und den Schwenkkörper 38 in die Richtung B, was jedoch keine Auswirkung auf die Betätigung der Lösetaste 22 hat. Umgekehrt hat auch die Bewegung der Lösetaste 22 keinen weiteren Einfluss auf den Massekörper 36 oder den Schwenkkörper 38, da keine weitere Kopplung an diese Körper 36, 38 vorgesehen ist.

Ausgehend vom Normalzustand des Gurtschlosses 10 mit eingesteckter Steckzunge und nicht gedrückter Lösetaste 22 soll nun der Fall einer starken Beschleunigung des Gurtschlosses 10 in der Richtung B betrachtet werden, wie er insbesondere beim Abbremsen des Gurtschlosses 10 am Ende eines Gurtstraffvorgangs oder infolge eines harten Stoßes auf den Fahrzeugboden, der sich auf das Gurtschloss 10 überträgt, auftreten kann. In diesem Fall wirken auf alle Bauteile des Gurtschlosses 10 Trägheitskräfte in der Richtung A. Eine Bewegung der Lösetaste 22 in dieser Richtung, die eine Entriegelung der Steckzunge zur Folge haben könnte, ist aber unterbunden, wie nachfolgend erläutert wird.

Die auf den Massekörper 36 und den an diesen angekoppelten Schwenkkörper 38 wirkende Trägheitskraft überträgt sich auf den zweiten freien Arm 30 des Kopplungshebels 24. Da der Kopplungshebel 24 mit den Stiften 26 drehbar an der schlossgehäusefesten Rastnockenführung 18 gelagert ist, wird über den zweiten freien Arm 30 des Kopplungshebels 24 eine zur Richtung A entgegengesetzt gerichtete Kraft auf die Stufe 32 und damit auf die Lösetaste 22 ausgeübt, wie sich am besten aus Figur 4 ergibt. Da der Massekörper 36 und der Schwenkkörper 38 zusammen schwerer als die Lösetaste 22 sind, ist diese in der Richtung B auf die Lösetaste 22 wirkende Kraft größer als die in der Richtung A wirkende Trägheitskraft. Somit wird das Gurtschloss 10 sicher im verriegelten Zustand gehalten.

Die Bewegung des Massekörpers 36 in der Richtung A ist hierbei durch einen Anschlag 44 der Rastnockenführung 18 begrenzt, der in der Bewegungsbahn eines Gegenanschlags 46 des Massekörpers 36 liegt.

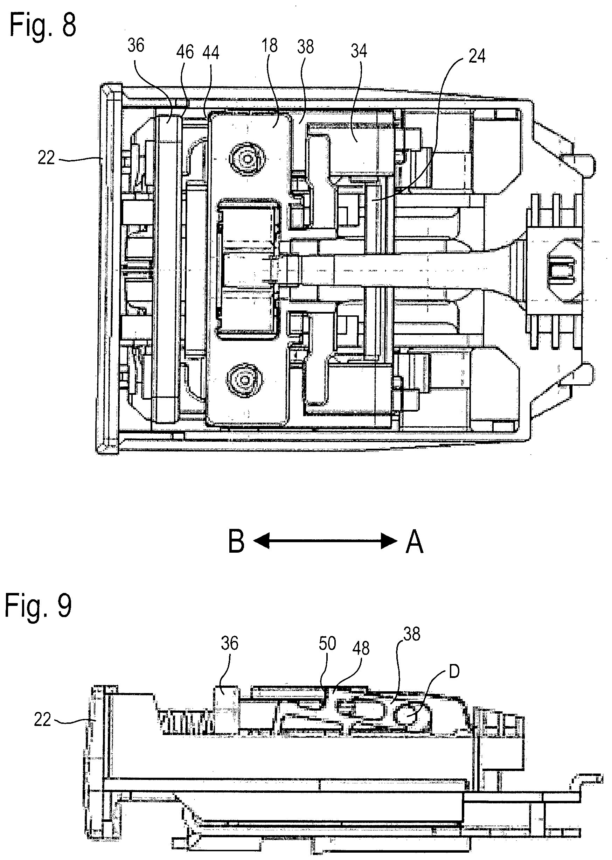

Die Figuren 9 bis 11 zeigen das Gurtschloss 10 bei einer starken Beschleunigung in der Richtung A, wie sie insbesondere zu Beginn eines Gurtstraffprozesses auftreten kann. In diesem Fall wirkt der in der Richtung B auf die Lösetaste 22 wirkenden Trägheitskraft keine Kraft entgegen. Die auf den Massekörper 36 und den Schwenkkörper 38 wirkenden Trägheitskräfte können nicht über den Kopplungshebel 24 in der Richtung A auf die Lösetaste 22 übertragen werden, da der Kopplungshebel 24 nicht mit der Stufe 32 verbunden ist und sich somit von der Stufe 32 entfernt.

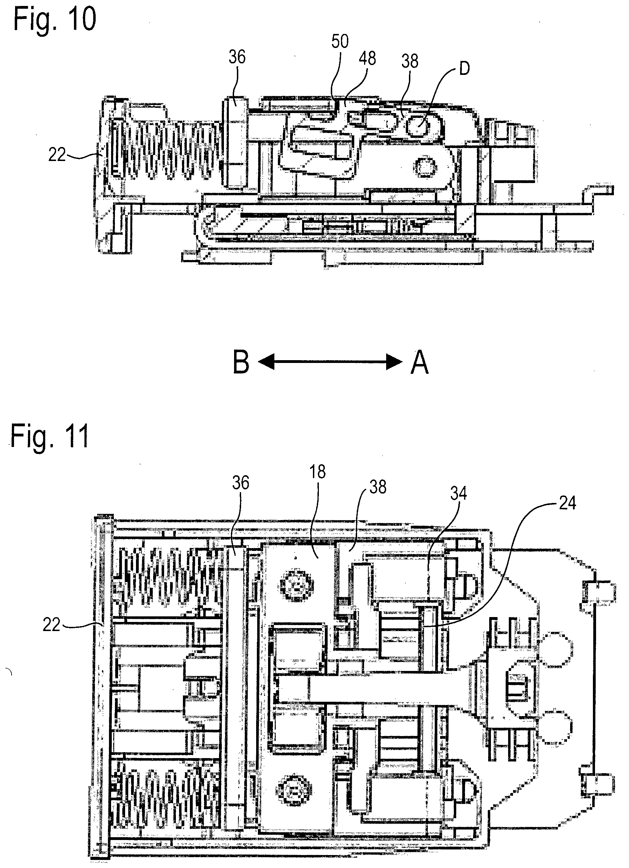

Aufgrund des bezüglich seiner Drehachse D exzentrischen Schwerpunkts des Schwenkkörpers 38 erzeugt die auf den Schwenkkörper 38 in der Richtung B wirkende Trägheitskraft ein Drehmoment, sodass der Schwenkkörper 38 eine Drehbewegung um seine Drehachse D ausführt, gemäß der Darstellung in den Figuren 9 und 10 im Uhrzeigersinn. Dadurch kommt ein Sicherungsabschnitt 48 des Schwenkkörpers 38 in Eingriff mit einem Halteabschnitt 50 der Rastnockenführung 18. Da die Rastnockenführung 18 relativ zum Schlossgehäuse 16 unbeweglich ist, wird dadurch eine weitergehende Bewegung des Schwenkkörpers 38 und des Massekörpers 36 in der Richtung B unterbunden. Auf diese Weise ist der Massekörper 36 bei einer starken Beschleunigung in der Richtung A gesichert und wird in Position gehalten.

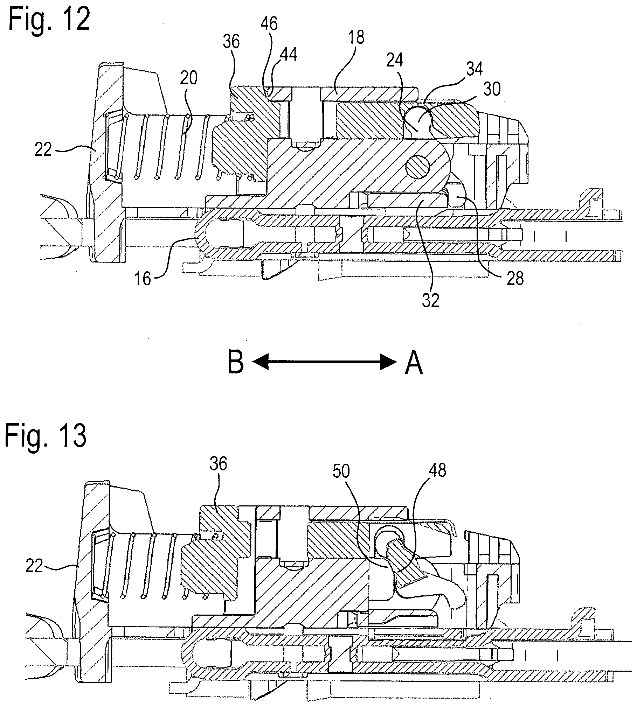

In den Figuren 12 und 13 ist ein Gurtschloss für ein Sicherheitsgurtsystem gemäß einer zweiten Ausführungsform dargestellt, das einen ähnlichen Aufbau wie das zuvor beschriebene und in den Figuren 1 bis 11 gezeigte Gurtschloss 10 hat. Deshalb wurden für einander entsprechende Bauteile, die die gleiche Funktion haben, trotz gewisser Abweichungen in der konkreten Ausgestaltung die gleichen Bezugszeichen verwendet, und es wird insoweit auf die obigen Erläuterungen zu diesen Bauteilen verwiesen.

Der wesentliche Unterschied zwischen den beiden Ausführungsformen besteht darin, dass das Gurtschloss nach der zweiten Ausführungsform eine kürzere Baulänge hat, da keine Schwenkkörper 38 vorgesehen sind. Dafür ist der Sicherungsabschnitt 48 am Kopplungshebel 24 gebildet, der gekröpft ausgeführt ist. Dementsprechend ist der Halteabschnitt 50 der gehäusefesten Rastnockenführung 18 in Gegenüberlage zum Sicherungsabschnitt 48 angeordnet. Das Zusammenwirken des Sicherungsabschnitts 48 mit dem Halteabschnitt 50 wird später noch genauer beschrieben.

Die Figur 12 zeigt das Gurtschloss der zweiten Ausführungsform zunächst in einer der Figur 4 entsprechenden Darstellung im Normalzustand, d. h. die Lösetaste 22 ist nicht gedrückt. Im Falle einer starken Beschleunigung des Gurtschlosses in Richtung B wird auf die gleiche Weise wie bei der ersten Ausführungsform eine Bewegung der Lösetaste 22 in der Richtung A, die zu einer Entriegelung einer eingesteckten Steckzunge führen könnte, unterbunden. Die auf den Massekörper 36 wirkende Trägheitskraft in der Richtung A erfährt wegen des drehbar gelagerten Kopplungshebels 24 eine Richtungsumkehr und wird in der Richtung B auf die Stufe 32 und damit auf die Lösetaste 22 übertragen. Da der Massekörper 36 schwerer als die Lösetaste 22 ist, ist die in der Richtung B auf die Lösetaste 22 übertragene Kraft größer als die in der Richtung A auf die Lösetaste 22 wirkende Trägheitskraft, sodass die Lösetaste 22 sicher im verriegelten Zustand verbleibt. Der Anschlag 44 begrenzt in dieser Situation wiederum die Bewegung des Massekörpers 36 in der Richtung A.

In Figur 13 ist das Gurtschloss bei einer starken Beschleunigung in der Richtung A gezeigt. In diesem Fall wird der in der Richtung B auf die Lösetaste 22 wirkenden Trägheitskraft keine Kraft entgegengesetzt, da die auf den Massekörper 36 wirkende Trägheitskraft nicht über den von der Stufe 32 entkoppelten Kopplungshebel 24 in die Richtung A umgelenkt wird.

Eine weitergehende Bewegung des Massekörpers 36 in der Richtung B, die sich auf die Lösetaste 22 übertragen könnte, wird bei dieser Ausführungsform dadurch unterbunden, dass der Kopplungshebel 24 den Massekörper 36 in Position hält. Der Massekörper 36 führt aufgrund der in der Richtung B auf ihn wirkenden Trägheitskraft eine Bewegung in diese Richtung aus, allerdings nur so weit, bis, wie in Figur 13 gezeigt, der durch die Verschiebung des Massekörpers 36 gegen den Uhrzeigersinn verschwenkte gekröpfte Kopplungshebel 24 in Eingriff mit der gehäusefesten Rastnockenführung 18 kommt. Genauer gesagt: sobald der Sicherungsabschnitt 48 des Kopplungshebels 24 flächig an dem als Anschlag dienenden Halteabschnitt 50 der Rastnockenführung 18 anliegt, kann sich der Massekörper 36 nicht weiter in der Richtung B bewegen und ist somit gesichert.

Ansonsten entspricht die Funktionsweise der zweiten Ausführungsform des Gurtschlosses der der ersten Ausführungsform. Insbesondere behindern der Sicherungsabschnitt 48 und der Halteabschnitt 50 beim normalen Drücken der Lösetaste 22 deren Bewegung in der Richtung A nicht, d. h. dem Kopplungshebel 24 ist eine Drehbewegung entgegen dem Uhrzeigersinn gestattet.

### Bezugszeichenliste

- 10: Gurtschloss
- 12: Gehäuseschale
- 14: Gehäuseschale
- 16: Schlossgehäuse
- 18: Rastnockenführung
- 20: Druckfedern
- 22: Lösetaste
- 24: Kopplungshebel
- 26: Stifte
- 28: erster freier Arm
- 30: zweiter freier Arm
- 32: Stufe
- 34: Aufnahme
- 36: Massekörper
- 38: Schwenkkörper
- 40: Lagerstifte
- 42: Lageröffnungen
- 44: Anschlag
- 46: Gegenanschlag
- 48: Sicherungsabschnitt
- 50: Halteabschnitt

## Patentansprüche

1. Gurtschloss (10) für einen Sicherheitsgurt, mit
einem Schlossgehäuse (16),
einem Verriegelungsmechanismus zum Verriegeln einer in das Schlossgehäuse (16) eingeführten Steckzunge,
einer Lösetaste (22), die in eine erste Richtung A relativ zum Schlossgehäuse (16) verschiebbar ist zum Entriegeln der Steckzunge, und
einem Sicherungsmechanismus zum Verhindern eines selbsttätigen Verschiebens der Lösetaste (22) in der ersten Richtung A
wobei der Sicherungsmechanismus einen in der ersten Richtung A relativ zum Schlossgehäuse (16) beweglichen Massekörper (36) und einen drehbar gelagerten Kopplungshebel (24) mit einer Drehachse C aufweist, die relativ zum Schlossgehäuse (16) unbeweglich ist,
und wobei der Kopplungshebel (24) so an den Massekörper (36) und an die Lösetaste (22) gekoppelt ist, dass er bei einer Beschleunigung des Gurtschlosses (10) in einer der ersten Richtung A entgegengesetzten zweiten Richtung B eine in der ersten Richtung A auf den Massekörper (36) wirkende Trägheitskraft in der entgegengesetzten zweiten Richtung B auf die Lösetaste (22) überträgt,
**gekennzeichnet durch** einen Sperrmechanismus, der bei einer Beschleunigung des Gurtschlosses (10) in der ersten Richtung A eine durch die in der zweiten Richtung B auf den Massekörper (36) wirkende Trägheitskraft bedingte Verschiebung des Massekörpers (36) in der zweiten Richtung B begrenzt.

2. Gurtschloss (10) nach Anspruch 1, **dadurch gekennzeichnet, dass** der Sperrmechanismus einen Schwenkkörper (38) aufweist, der drehbar um eine Drehachse D am Massekörper (36) gelagert ist und einen Schwerpunkt hat, der bezüglich seiner Drehachse D exzentrisch ist.

3. Gurtschloss (10) nach Anspruch 2 **dadurch gekennzeichnet, dass** eine in der zweiten Richtung B auf den Schwenkkörper (38) wirkende Trägheitskraft eine Auslenkung des Schwenkkörpers (38) bewirkt, durch die ein Sicherungsabschnitt (48) des Schwenkkörpers (38) in Eingriff mit einem schlossgehäusefesten Halteabschnitt (50) kommt.

4. Gurtschloss (10) nach Anspruch 1, **dadurch gekennzeichnet, dass** die Masse des Massekörpers (36) größer als die Masse der Lösetaste (22) ist.

5. Gurtschloss (10) nach einem der vorhergehenden Ansprüche, **dadurch gekennzeichnet, dass** die Masse der Lösetaste (22) geringer ist als die Summe der Massen des Massekörpers (36) und des Schwenkkörpers (38).

6. Gurtschloss (10) nach Anspruch 1, **dadurch gekennzeichnet, dass** der Sperrmechanismus so ausgelegt ist, dass eine Bewegung des Massekörpers (36) in der zweiten Richtung B eine Drehung des Kopplungshebels (24) bewirkt, die durch einen schlossgehäusefesten Halteabschnitt (50) begrenzt ist.

7. Gurtschloss (10) nach einem der vorhergehenden Ansprüche, **dadurch gekennzeichnet, dass** der Kopplungshebel (24) zwei sich von seiner Drehachse C erstreckende freie Arme (28, 30) aufweist, wobei ein erster freier Arm (28) an der Lösetaste (22) und ein zweiter freier Arm (30) am Massekörper (36) angreift.

8. Gurtschloss (10) nach Anspruch 7, **dadurch gekennzeichnet, dass** in einem Normalzustand des Gurtschlosses (10), in dem sich die Lösetaste (22) relativ zum Schlossgehäuse (16) in einer in der zweiten Richtung B ausgefahrenen Position befindet, der erste freie Arm (28) in der zweiten Richtung B an der Lösetaste (22) anliegt, insbesondere an einer Stufe (32), und durch eine Verschiebung der Lösetaste (22) in der ersten Richtung A auslenkbar ist.

9. Gurtschloss (10) nach Anspruch 8, **dadurch gekennzeichnet, dass** der zweite freie Arm (30) bei der Auslenkung des Kopplungshebels (24) auf die Stufe (32) der Lösetaste (22) gleitet.

10. Gurtschloss (10) nach einem der vorhergehenden Ansprüche, **dadurch gekennzeichnet, dass** abgesehen vom Kopplungshebel (24) keine weitere Kopplung zwischen der Lösetaste (22) und dem Massekörper (36) besteht.

11. Gurtschloss (10) nach einem der vorhergehenden Ansprüche, **dadurch gekennzeichnet, dass** eine Verschiebung des Massekörpers (36) in der ersten Richtung A durch einen schlossgehäusefesten Anschlag (44) begrenzt ist, der vorzugsweise in der Bewegungsbahn eines Gegenanschlags (46) des Massekörpers (36) liegt.

## Claims

1. A belt buckle (10) for a seat belt, comprising
a buckle case (16),
a locking mechanism for locking a plug-in tongue inserted in the buckle case (16),
a release key (22) which is movable in a first direction A relative to the buckle case (16) for unlocking the plug-in tongue, and
a securing mechanism for preventing the release key (22) from automatically moving in the first direction A,
wherein the securing mechanism includes a mass body (36) movable in the first direction A relative to the buckle case (16) and a rotatably supported coupling lever (24) having an axis of rotation C which is immobile relative to the buckle case (16),
and wherein the coupling lever (24) is coupled to the mass body (36) and to the release key (22) so that, upon acceleration of the belt buckle (10) in a second direction B opposite to the first direction A, it transmits an inertia force which in the first direction A acts on the mass body (36) in the opposite second direction B to the release key (22),
**characterized by** an interlock mechanism which, upon acceleration of the belt buckle (10) in the first direction A, limits displacement of the mass body (36) in the second direction B caused by the inertia force which acts on the mass body (36) in the second direction B.

2. The belt buckle (10) as claimed in claim 1, **characterized in that** the interlock mechanism includes a pivoting body (38) which is pivoted about an axis of rotation D at the mass body (36) and has a point of gravity which is eccentric with respect to its axis of rotation D.

3. The belt buckle (10) as claimed in claim 2, **characterized in that** an inertia force acting on the pivoting body (38) in the second direction B causes a deflection of the pivoting body (38) by which a securing portion (48) of the pivoting body (38) engages in a retaining portion (50) fixed to the buckle case.

4. The belt buckle (10) as claimed in claim 1, **characterized in that** the mass of the mass body (36) is greater than the mass of the release key (22).

5. The belt buckle (10) as claimed in any one of the preceding claims, **characterized in that** the mass of the release key (22) is lower than the sum of the masses of the mass body (36) and of the pivoting body (38).

6. The belt buckle (10) as claimed in claim 1, **characterized in that** the interlock mechanism is designed so that a movement of the mass body (36) in the second direction B causes rotation of the coupling lever (24) which is limited by a retaining portion (50) fixed to the buckle case.

7. The belt buckle (10) as claimed in any one of the preceding claims, **characterized in that** the coupling lever (24) includes two free arms (28, 30) extending from its axis of rotation C, with a first free arm (28) acting on the release key (22) and a second free arm (30) acting on the mass body (36).

8. The belt buckle (10) as claimed in claim 7, **characterized in that**, in a normal state of the belt buckle (10) in which the release key (22) is positioned relative to the buckle case (16) at a position extended in the second direction B, the first free arm (28) in the second direction B is adjacent to the release key (22), especially to a step (32), and can be deflected in the first direction A by displacement of the release key (22).

9. The belt buckle (10) as claimed in claim 8, **characterized in that** the second free arm (30) slides to the step (32) of the release key (22) when the coupling lever (24) is deflected.

10. The belt buckle (10) as claimed in any one of the preceding claims, **characterized in that**, apart from the coupling lever (24), no further coupling exists between the release key (22) and the mass body (36).

11. The belt buckle (10) as claimed in any one of the preceding claims, **characterized in that** displacement of the mass body (36) in the first direction A is limited by a stop (44) fixed to the buckle case which is preferably located in the path of motion of a counter-stop (46) of the mass body (36).

## Revendications

1. Verrouilleur de ceinture (10) pour une ceinture de sécurité, comprenant un corps de verrouilleur (16),
un mécanisme de verrouillage pour verrouiller une languette d'insertion introduite dans le corps de verrouillage (16),
un bouton de déverrouillage (22) qui peut être déplacé dans une première direction A par rapport au corps de verrouilleur (16) pour déverrouiller la languette d'insertion, et
un mécanisme de verrouillage pour empêcher le déplacement automatique du bouton de libération (22) dans la première direction A
pour lequel le mécanisme de verrouillage comprend dans la première direction A par rapport au corps de verrouilleur (16) une masselotte mobile (36) et un levier d'accouplement (24) monté libre en rotation avec un axe de rotation C, qui par rapport au corps de verrouilleur (16) est immobile,
et pour lequel le levier d'accouplement (24) est couplé au corps de masse (36) et au bouton de déverrouillage (22) de sorte que, il transmet par une accélération du verrouilleur de ceinture (10) dans une deuxième direction B opposée à la première direction A une force d'inertie dans la première direction A de la masselotte (36) vers la seconde direction opposée B du bouton de déverrouillage (22),
**caractérisé par** un mécanisme de verrouillage, qui par une accélération du verrouilleur de ceinture (10) dans la première direction A limite le déplacement induit de la masselotte (36) dans la deuxième direction B par une force d'inertie agissant dans la deuxième direction B sur la masselotte (36).

2. Verrouilleur de ceinture (10) selon la revendication 1, **caractérisé en ce que** le mécanisme de verrouillage comprend un corps pivotant (38) qui est monté libre en rotation autour d'un axe de rotation D de la masselotte (36) et a un centre de gravité, qui est excentrique par rapport à son axe de rotation D.

3. Verrouilleur de ceinture (10) selon la revendication 2, **caractérisé en ce qu'**une force d'inertie dans la deuxième direction B du corps pivotant (38) provoque une déviation du corps pivotant (38), pour lequel une zone de fixation (48) du corps pivotant (38) vient en prise avec une zone de maintien (50) du corps de verrouilleur.

4. Verrouilleur de ceinture (10) selon la revendication 1, **caractérisé en ce que** la masse de la masselotte (36) est supérieure à la masse du bouton de déverrouillage (22).

5. Verrouilleur de ceinture (10) selon l'une des revendications précédentes, **caractérisé en ce que** la masse du bouton de déverrouillage (22) est inférieure à la somme des masses du corps de masse (36) et du corps de pivotant (38).

6. Verrouilleur de ceinture (10) selon la revendication 1, **caractérisé en ce que** le mécanisme de verrouillage est conçu de telle sorte qu'un mouvement de la masselotte (36) dans la deuxième direction B entraîne la rotation du levier de couplage (24), qui est limité par une zone de maintien fixe (50) du corps de verrouilleur.

7. Verrouilleur de ceinture (10) selon l'une quelconque des revendications précédentes, **caractérisé en ce que** le levier de couplage (24) présente deux bras (28, 30) libres en rotation selon son axe C pour lequel un premier bras libre (28) vient en prise avec le bouton de déverrouillage (22) et un second bras libre (30) vient en prise avec la masselotte (36).

8. Verrouilleur de ceinture (10) selon la revendication 7, **caractérisé en ce que** dans un état normal du verrouilleur de ceinture (10), pour lequel le bouton de libération (22) se trouve, par rapport au corps de verrouilleur (16) dans une position étendue dans la deuxième direction B, la première bras libre (28) prend appui dans la deuxième direction B sur le bouton de déverrouillage (22), en particulier sur un épaulement (32) et peut changer de direction par un déplacement du bouton de déverrouillage (22) dans la première direction A.

9. Verrouilleur de ceinture (10) selon la revendication 8, **caractérisé en ce que** le deuxième bras libre (30) coulisse lors de la déviation du levier de couplage (24) à l'épaulement (32) du bouton de déverrouillage (32).

10. Verrouilleur de ceinture (10) selon l'une des revendications précédentes, **caractérisé en ce que**, outre le levier d'accouplement (24) aucun autre couplage n'est présent entre le bouton de déverrouillage (22) et la masselotte (36).

11. Verrouilleur de ceinture (10) l'une des revendications précédentes, **caractérisé en ce qu'**un déplacement de la masselotte (36) dans la première direction A est limité par une butée fixe (44) du corps de verrouilleur, qui est positionnée de préférence dans la trajectoire de déplacement d'une contre-butée (46) de la masselotte (36).
